# EUROPÄISCHE PATENTSCHRIFT

(11) **EP 0 691 046 B1**
(45) Veröffentlichungstag und Bekanntmachung des Hinweises auf die Patenterteilung: **21.01.1998**
(21) Anmeldenummer: 94910342.8
(22) Anmeldetag: 17.03.1994
(51) Int. Cl.: H02H 3/02, H01H 79/00

(54) **ANORDNUNG ZUR FREISCHALTUNG VON ABZWEIGEN EINES NIEDERSPANNUNGS-LEITUNGSNETZES IM KURZSCHLUSSFALL**
ARRANGEMENT FOR DISCONNECTING BRANCHES OF A LOW VOLTAGE SUPPLY NETWORK UNDER SHORT CIRCUIT CONDITIONS
AGENCEMENT DE DECONNEXION DE DERIVATIONS D'UN RESEAU BASSE TENSION EN CAS DE COURT-CIRCUIT

(30) Priorität: 25.03.1993 DE 4309794
(43) Veröffentlichungstag der Anmeldung: 10.01.1996
(73) Patentinhaber: SIEMENS AKTIENGESELLSCHAFT, 80333 München (DE)
(72) Erfinder: POHL, Fritz, D-91334 Hemhofen (DE); JAEHNER, Wilfried, D-90482 Nürnberg (DE)
(86) Internationale Anmeldenummer: DE9400296
(87) Internationale Veröffentlichungsnummer: WO9422197

(56) Entgegenhaltungen:
- DE-A- 4 040 359
- DE-A- 4 110 335

## Beschreibung

Die Erfindung bezieht sich auf eine Anordnung zur Freischaltung von Abzweigen eines Niederspannungs-Leitungsnetzes im Kurzschlußfall, bei dem im Abzweig Verbraucher an Phasenleiter und einen zugehörigen Nulleiter geschaltet sind, wobei dem Verbraucher ein Schaltelement zum Ein- und/oder Ausschalten vorgeschaltet ist und im Phasenleiter und/oder Nulleiter zusätzlich Schaltelemente zur Kurzschlußschaltung vorgesehen sind, an die eine Überbrückungsschaltung mit Schalter angeschaltet ist, wobei im Phasenleiter ein einziger Leistungsschalter vorhanden ist.

Zum Kurzschlußschutz von Niederspannungs-Abzweigungen werden üblicherweise strombegrenzende Leistungsschalter oder Leitungsschutzschalter eingesetzt. Die Schaltgeräte begrenzen die Durchlaßströme auf typisch 1/3 bis 1/2 der Stromamplitude des prospektiven Kurzschlußstromes. Für empfindliche elektrische Einrichtungen, beispielsweise Schütze bzw. Relais, sind die Kurzschlußauswirkungen derart hoher Durchlaßströme jedoch nicht tolerierbar. So können Schütz- oder Relaiskontakte durch Stromkräfte bei hohen Strömen dynamisch öffnen und infolge der Kontaktaufschmelzung durch Lichtbögen beim Wiederschließen verschweißen.

Vom Stand der Technik sind bereits verschiedene Möglichkeiten bekannt, durch Überbrückung eines Niederspannungsabzweiges die Kurzschlußauswirkungen auf der Lastseite von Schutzeinrichtungen zu begrenzen. In der DE-A-40 40 359 wird beispielsweise eine Hybrid-Überbrückungseinrichtung beschrieben, welche auf der Lastseite der Schutzschaltung das Stromwärmeintegral auf ca. 1/20 des Wertes strombegrenzender Leitungsschutzschalter begrenzt. Diese sehr hohe Schutzwirkung ist beim Einsatz von Halbleiterschaltern, beispielsweise zum Steuern von Verbrauchern, in Niederspannungsabzweigen notwendig, da kurzzeitige Überströme den zehnfachen Wert des Nennstromes nicht übersteigen dürfen, um den Halbleiter nicht zu zerstören. Der Geräteaufwand ist hierfür jedoch beachtlich, da die Hybrid-Überbrückungseinrichtung einen Halbleiterschalter mit höherem Nennstrom und einer Stromerfassungs- und Ansteuereinrichtung benötigt. Weiterhin wird mit der EP-A-0 504 463 eine Überbrückung von Niederspannungsabzweigen vorgeschlagen, bei welcher der Leistungsschalter mit einem Abgriff der Löschblechkammer versehen ist und der Schaltlichtbogen die Überbrückung einschaltet. Der Kurzschlußschutz hängt hierbei von der Schaltgeschwindigkeit der Schaltermechanik und von der Laufgeschwindigkeit des Schaltlichtbogens ab. Es wird daher nur eine relativ geringe Reduzierung des Stromwärmeintegrals auf der Lastseite der Schutzeinrichtung erreicht, welches etwa die Hälfte des Durchlaß-Stromwärmeintegrales beträgt.

Aus der DE-A-41 10 335 ist weiterhin eine Einrichtung zum Kurzschlußschutz bekannt, bei der dem empfindlichen Verbraucher insbesondere ein Halbleiterschalter vorgeschaltet ist, der mit einem mechanischen Schalter in Reihe geschaltet ist und einen Überbrückungsstromzweig zum Nulleiter enthält. Dabei ist der Überbrückungsstromzweig mit einem Überbrückungsschalter versehen, der vom Kurzschlußstrom unverzögert eingeschaltet wird und den Verbraucher und einen zusätzlichen Leistungsschalter überbrückt. Dadurch werden insbesondere der Verbraucher und der empfindliche Halbleiterschalter entlastet, wobei in jedem Fall Leitungsschutzschalter im Phasenleiter und im Nulleiter vorhanden sein müssen, was einen zusätzlichen Aufwand beinhaltet.

Weiterhin ist aus der US-A-2 924 752 eine Anordnung zur Freischaltung von dreiphasigen Niederspannungs-Leitungsnetzen mit einem dreipoligen Leistungsschalter bekannt, bei dem eine Überbrückungsschaltung mit Überbrückungsstromzweig vorhanden ist, über welchen ein Teil des Kurzschlußstromes am Magnetantrieb vorbei über Einschaltkontakte geleitet wird. Diese Anordnung ist wegen der speziellen Gestaltung des Überbrückungsstromzweiges ausschließlich für mehrpolige Netze vorgesehen.

Die Aufgabe ist erfindungsgemäß dadurch gelöst, daß auf der Lastseite des einzigen Leistungsschalters die Überbrückungsschaltung einen Teil des Kurzschlußstromes am Schalter vorbeileitet, wobei in der Überbrückungsschaltung ein Überbrückungsstromzweig mit Widerstand vorhanden ist, dessen Widerstandswert zwischen 25 und 50 % des Wertes oer kleinsten zu erwartenden Lastkreisimpedanz beträgt und über den der magnetisch angetriebene Schalter am Nulleiter angeschlossen ist.

Die erfindungsgemäße Anordnung ist also gegenüber dem Stand der Technik vereinfacht. Am Überbrückungskontakt wird also ein wesentlicher Teil des Kurzschlußstroms zum Nulleiter vorbeigeleitet wird. In vorteilhafter Weise bildet der Überbrückungszweig nunmehr zusammen mit dem Leistungsschalter eine Einheit.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen
- Figur 1: das Prinzip einer Überbrückungsschaltung zum Kurzschlußschutz empfindlicher Anlagenteile eines Lastkreises und die
- Figuren 2 und 3: zwei erfindungsgemäße Möglichkeiten der Integration des Leistungsschalters und der Überbrückungsschaltung gemäß Figur 1 zu einer gemeinsamen Schutzeinrichtung.

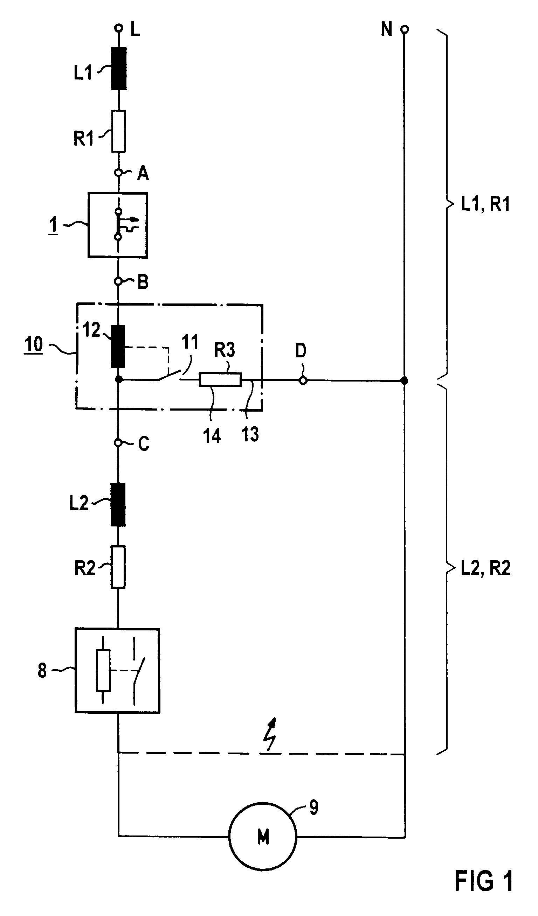

In Figur 1 ist ein einphasiges elektrisches Netz mit einer Impedanz L₁, R₁ auf der Einspeiseseite eines Leistungsschalters, der auf der Lastseite eine Überbrückungsschaltung sowie eine Kurzschlußimpedanz L₂, R₂ hat, die zu einem empfindlichen Anlageteil mit einem Verbraucher führt, dargestellt. Im einzelnen bedeutet in FIG 1 neben den selbsterklärenoen Buchstabensymbolen 1 der bereits erwähnte Leistungsschalter, 8 ein Schütz und 9 einen Motor als Verbraucher, wobei Schütz 8 und Motor 9 ein empfindliches Anlagenteil bilden.

Auf der Lastseite des Leistungsschalters 1 mit den Anschlußpunkten A und B ist eine Überbrückungsschaltung 10 angeschlossen, die aus einem, den eigentlichen Überbrückungskontakt bildenden Schalter 11, einem zugehörigen Magnetantrieb 12 und einem Überbrückungsstromzweig 13 mit Widerstand 14 besteht. Der Überbrückungsstromzweig 13 ist also über die Komponenten 11, 12 und 13 am Punkt B angeschaltet und hat einen Anschlußpunkt C zum Schütz 8 sowie einen Anschlußpunkt C zum Nulleiter.

Eine entsprechende Schaltung ist auch auf mehrphasige Leitungssysteme auslegbar, so daß dann eine mehrpolige Überwachungsschaltung realisiert wird.

Anhand Figur 1 kann am Beispiel eines Leitungsschutzes für 16 A Nennstrom der Magnetantrieb der Uberbrückungseinrichtung so ausgelegt werden, daß bei satten Kurzschlüssen von I_{prosp.} 3 bis 6 kA Ansprechzeiten des Magnetantriebes von etwa 1,2 bis 0,8 ms erreicht werden. Die rasche Entlastung des Lastkreises durch die Überbrückungsschaltung 10 führt dabei zu einer I².t-Belastung, die nunmehr etwa 1/5 bis 1/10 des Durchlaß-I².t-Wertes des Leitungsschutzschalters beträgt.

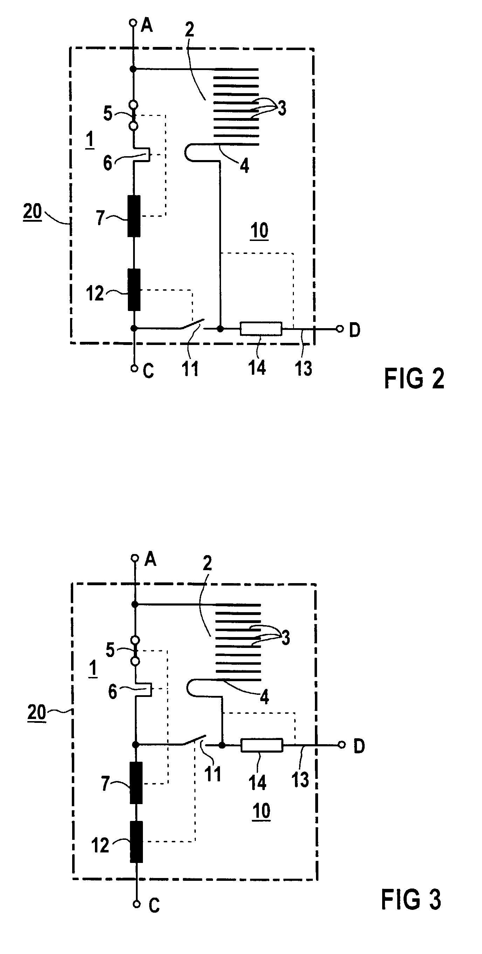

In den Figuren 2 und 3 ist der Leistungsschalter 1 gemäß Figur 1 im einzelnen aus einer Lichtbogenkammer mit Löschblechen 3 und Laufschienen 4, einem zugehörigen Schalter 5, einem thermischen Auslöser 6 sowie einem Magnetantrieb 7 gebildet. Die strichlierte Linie gibt jeweils die aus der Integration des Leistungsschalters 1 und der Uberbrückungseinrichtung 10 gebildete gemeinsame Schutzeinrichtung an.

In Figur 2 bleiben nach dem Einschalten des Überbrückungs-Stromzweiges die Magnetspulen 7 und 12 des Auslösers einerseits und der Überbrückungseinrichtung 10 andererseits solange stromdurchflossen, bis der Kurzschlußstrom auf der Einspeiseseite Null geworden ist. Zwischen dem Überbrückungsstromzweig und dem Lastkreis erfolgt eine Stromaufteilung entsprechend dem Impedanzverhältnis R₃ zu R₂, L₂. Bei sehr großen Zeitkonstanten L₂/(R₂+R₃) kann noch ein Laststrom fließen, obwohl der einspeiseseitige Kurzschlußstrom unterbrochen ist. In diesem Fall öffnet der Schalter 11 mit Überbrückungskontakt und die Schaltspannung beschleunigt das Abklingen des Laststromes.

In FIG 2 überbrückt die Lichtbogenkammer 2 mit den Anschlußpunkten der Laufschienen 4 den Leistungsschalterkontakt 5, den thermischen Auslöser 6 und den magnetischen Auslöser 7 sowie den Magnetantrieb 12 und den zugehörigen Schalter 11. Nach der Lichtbogenkommutierung in die Lichtbogenkammer 2 wird unter anderem der Magnetantrieb 12 der Uberbrückungseinrichtung 10 stromlos und der Schalter 11 unterbricht mit seiner Schaltspannung relativ frühzeitig den Laststrom.

Während in Figur 1 der Einschaltkontakt des Schalters 11 normalerweise lichtbogenfrei schaltet, tritt bei der Uberbrückungseinrichtung der Figur 3 am Einschaltkontakt des Schalters 11 eine Lichtbogenbelastung auf, was für die Bemessung der dabei verwendeten Kontaktstücke berücksichtigt werden muß.

In Figur 3 unterscheidet sich die Schutzeinrichtung von derjenigen der Figur 2 im wesentlichen durch die Anordnung der Magnetantriebe 7 und 12 im Lastkreis anstatt im Einspeisekreis. Die Magnetantriebe 7 und 12 brauchen dazu nicht mehr für die volle Kurzschlußbelastung ausgelegt werden.

Speziell die Anordnung nach Figur 3 ist deswegen besonders vorteilhaft, da nach der Stromentlastung des Schalters 11 durch die Lichtbogenkommutierung in die Schaltkammer 2 dessen Einschaltkontakt solange geschlossen bleibt, wie die magnetische Erregung der Magnetantriebe 7 und 12 durch den Laststrom anhält. Der Schalter 11 öffnet den Einschaltkontakt daher lichtbogenfrei nach dem Abklingen des Laststromes.

Beispielsweise kann die Anordnung des thermischen Auslösers 6 zwischen dem Anschluß C und dem Anschlußpunkt des Überbrückungszweiges gelegt werden. Die Magnetantriebe 7 und 12 können durch einen gemeinsamen Magnetantrieb für die Auslösung und die Überbrückung ersetzt werden. Wenn die Überbrückungsschaltung mehrpolig ausgelegt werden soll, werden die einzelnen Anschlüsse miteinander verbunden bzw. am Nulleiter angeschlossen. Bei einem integrierten Aufbau als mehrpoliger Überbrückungsschalter erfolgt die Verbindung der Anschlüsse D im Gerät.

Bei der beschriebenen Anordnung muß darauf geachtet werden, daß für den Überbrückungskontakt des Schalters 11 Kontaktstücke aus verschweißsicheren Kontaktwerkstoffen verwendet werden. Dazu kommen Werkstoffe auf Silber-Metalloxid(AgMe0)-Basis, wie beispielsweise das bekannte AgSnO₂8, oder Silber- bzw. Kupfer-Graphit-Werkstoffe, wie beispielsweise AgC5 bzw. CuC7, in Frage. Es ist auch eine unsymmetrische Kontaktpaarungen mit unterschiedlichen Werkstoffen möglich.

## Patentansprüche

1. Anordnung zur Freischaltung von Abzweigen eines Niederspannungs-Leitungsnetzes im Kurzschlußfall, bei dem im Abzweig Verbraucher (9) an Phasenleiter (L) und einen zugehörigen Nulleiter (N) geschaltet sind, wobei dem Verbraucher (9) ein Schaltelement (8) zum Ein- und/oder Ausschalten vorgeschaltet ist und im Phasenleiter (L) und/oder Nulleiter (N) zusätzliche Schaltelemente zur Kurzschlußabschaltung vorgesehen sind, an die eine Uberbrückungsschaltung (10) mit Schalter (11) angeschaltet ist, wobei nur im Phasenleiter (L) ein einziger Leistungsschalter (1) vorhanden ist, **dadurch gekennzeichnet**, daß auf der Lastseite des einzigen Leistungsschalters (1) die Überbrückungsschaltung (10) einen Teil des Kurzschlußstromes am Schalter (11) vorbeileitet, wobei in der Überbrückungsschaltung (10) ein Überbrückungsstromzweig (13) mit Widerstand (14) vorhanden ist, dessen Widerstandswert zwischen 25 und 50 % des Wertes der kleinsten zu erwartenden Lastkreisimpedanz beträgt und über den der magnetisch angetriebene Schalter (11) am Nullleiter (N) angeschlossen ist.

2. Anordnung nach Anspruch 1, **dadurch gekennzeichnet**, daß die Überbrückungsschaltung (10) zusammen mit dem Leistungsschalter (1) eine Einheit (20) bildet.

3. Anordnung nach Anspruch 2, **dadurch gekennzeichnet**, daß die beiden Magnetantriebe (7, 12) für den Leistungsschalter (1) einerseits und den Überbrückungsstromzweig (13) andererseits sich im Lastkreis befinden.

4. Anordnung nach Anspruch 3, **dadurch gekennzeichnet**, daß für die Auslösung des Leistungsschalters (1) einerseits und für das Einschalten des Schalters (11) andererseits ein gemeinsamer Magnetantrieb vorhanden ist.

5. Anordnung nach einem der vorhergehenden Ansprüche, mit einem thermischen Auslöser für den Leistungsschalter, **dadurch gekennzeichnet**, daß der thermische Auslöser (6) auf der Lastseite des überbrückungsstromzweiges (13) angeordnet ist.

6. Anordnung nach Anspruch 2 und Anspruch 5, **dadurch gekennzeichnet**, daß der Überbrückungsstromzweig (13) mit dem Anschlußpunkt der Laufschiene (4) des Leistungsschalters (1) verbunden ist, so daß über die Lichtbogenkammer (2) des Leistungsschalters (1) der thermische und der magnetische Auslöser (6, 7) sowie oer Magnetantrieb (12) überbrückt werden.

7. Anordnung nach einem der vorhergehenden Ansprüche, **gekennzeichnet** in der Anwendung als mehrpolige Überbrückungsschaltung bei mehrphasigen Netzen.

8. Anordnung nach einem der vorhergehenden Ansprüche, **gekennzeichnet** durch die Verwendung von verschweißsicheren Kontaktwerkstoffen beim Einschaltkontakt des Schalters (11) der Überbrückungsschaltung (10).

9. Anordnung nach Anspruch 8, **dadurch gekennzeichnet**, daß Kontaktwerkstoffe auf der Basis von Silber-Metalloxid (AgMeO), Silber-Graphit (AgC) oder Kupfer-Graphit (CuC) verwendet werden.

10. Anordnung nach Anspruch 8 und Anspruch 9, **gekennzeichnet** durch eine unsymmetrische Kontaktpaarung.

## Claims

1. Arrangement for isolating branches of a low-voltage supply system in the case of a short-circuit, in which low-voltage supply system, in the branch, consumers (9) are connected to phase conductors (L) and an associated neutral conductor (N), with there being connected upstream of the consumer (9) a switching element (8) for switching on and/or off, and additional switching elements for short-circuit breaking being provided in the phase conductor (L) and/or neutral conductor (N), to which switching elements is connected a bridging connection (10) having a switch (11), with a single circuit-breaker (1) being present only in the phase conductor (L), characterised in that on the load side of the single circuit-breaker (1), the bridging connection (10) conducts a portion of the short-circuit current past the switch (11), with there being present in the bridging connection (10) a bridging current branch (13) having a resistor (14), the value of resistance of which amounts to between 25 and 50% of the value of the smallest load-circuit impedance to be expected and by way of which the magnetically-driven switch (11) is connected to the neutral conductor (N).

2. Arrangement according to claim 1, characterised in that the bridging connection (10) forms a unit (20) together with the circuit-breaker (1).

3. Arrangement according to claim 2, characterised in that the two solenoid-operated mechanisms (7, 12) for the circuit-breaker (1) on the one hand and the bridging current branch (13) on the other hand are located in the load circuit.

4. Arrangement according to claim 3, characterised in that there is a common solenoid-operated mechanism for tripping the circuit-breaker (1) on the one hand and for closing the switch (11) on the other hand.

5. Arrangement according to one of the preceding claims, having a thermal trip element for the circuit-breaker, characterised in that the thermal trip element (6) is arranged on the load side of the bridging current branch (13).

6. Arrangement according to claim 2 and claim 5, characterised in that the bridging current branch (13) is connected to the connecting point of the guide rail (4) of the circuit-breaker (1), so that the thermal trip element (6) and the magnetic trip element (7) and also the solenoid-operated mechanism (12) are bridged by way of the arcing chamber (2) of the circuit-breaker (1).

7. Arrangement according to one of the preceding claims, characterised in its application as a multipolar bridging connection in multi-phase systems.

8. Arrangement according to one of the preceding claims, characterised by the use of weld-resistant contact materials in the case of the closing contact of the switch (11) of the bridging connection (10).

9. Arrangement according to claim 8, characterised in that contact materials based on silver metal oxide (AgMeO), silver graphite (AgC) or copper graphite (CuC) are used.

10. Arrangement according to claim 8 and claim 9, characterised by an asymmetrical contact pairing.

## Revendications

1. Dispositif de déconnexion de dérivations d'un réseau à basse tension en cas de court-circuit, dans lequel des appareils consommateurs (9) sont branchés dans la dérivation sur un fil de phase (L) et un fil de neutre (N) associé, un élément de commutation (8) est branché en amont de l'appareil consommateur (9) pour la connexion et/ou la déconnexion et des éléments de commutation sont prévus en plus dans le fil de phase (L) et/ou le fil de neutre (N) pour la coupure de court-circuit, éléments de commutation sur lesquels est branché un circuit de shuntage (10) comportant un interrupteur (11), et dans lequel un seul disjoncteur pour coupure de charge (1) est présent dans le fil de phase (L), caractérisé par le fait que, sur le côté de charge de l'unique disjoncteur (1), le circuit de shuntage (10) conduit une partie du courant de court-circuit par l'interrupteur (11), sachant qu'il est prévu dans le circuit de charge (10) une branche de shuntage (13) ayant une résistance (14) dont la valeur représente entre 25 et 50 % de la valeur de la plus petite impédance de charge à laquelle on peut s'attendre et par l'intermédiaire de laquelle l'interrupteur (11) entraîné de façon magnétique est raccordé au fil de neutre (N).

2. Dispositif selon la revendication 1, caractérisé par le fait que le circuit de shuntage (10) forme avec le disjoncteur (1) une unité (20).

3. Dispositif selon la revendication 2, caractérisé par le fait que les deux dispositifs d'entraînement magnétiques (7, 12) pour le disjoncteur (1) d'une part et pour la branche de shuntage (13) d'autre part se trouvent dans le circuit de charge.

4. Dispositif selon la revendication 3, caractérisé par le fait qu'un dispositif d'entraînement magnétique commun est prévu pour le déclenchement du disjoncteur (1) d'une part et pour la connexion de l'interrupteur (11) d'autre part.

5. Dispositif selon l'une des revendications précédentes, comprenant un déclencheur thermique pour le disjoncteur, caractérisé par le fait que le déclencheur thermique (6) est agencé sur le côté de charge de la branche de shuntage (13).

6. Dispositif selon la revendication 2 et selon la revendication 5, caractérisé par le fait que la branche de shuntage (13) est reliée au point de jonction de la barre (4) du disjoncteur (1) de telle sorte que le déclencheur thermique (6), le déclencheur magnétique (7) et le dispositif d'entraînement magnétique (12) sont shuntés par la boîte d'arc électrique (2) du disjoncteur (1).

7. Dispositif selon l'une des revendications précédentes, caractérisé par son application comme circuit de shuntage multipolaire pour des réseaux polyphasés.

8. Dispositif selon l'une des revendications précédentes, caractérisé par l'utilisation de matériaux de contacts anti-soudure pour le contact de connexion de l'interrupteur (11) du circuit de shuntage (10).

9. Dispositif selon la revendication 8, caractérisé par le fait que l'on utilise des matériaux de contacts à base d'oxyde métallique d'argent (AgMeO), de graphite d'argent (AgC) ou de graphite de cuivre (CuC).

10. Dispositif selon la revendication 8 et selon la revendication 9, caractérisé par un appariement non symétrique de contacts.
